# EUROPEAN PATENT SPECIFICATION

(11) **EP 0 454 419 B1**
(45) Date of publication and mention of the grant of the patent: **07.06.1995**
(21) Application number: 91303647.1
(22) Date of filing: 23.04.1991
(51) Int. Cl.: H01M 2/26, H01M 6/10

(54) **Connection strips for coiled electrode assemblies**
Verbindungsstreifen für gewickelte Elektrodenanordnungen
Bandes de connexion pour ensembles à électrodes enroulées

(30) Priority: 27.04.1990 US 515557
(43) Date of publication of application: 30.10.1991
(73) Proprietor: EVEREADY BATTERY COMPANY, INC., St. Louis Missouri 63164 (US)
(72) Inventor: Beatty, Theodore Robert, Bay Village, OH 44140 (US)
(74) Representative: Lord, Hilton David

(56) References cited:
- FR-A- 2 306 537
- GB-A- 2 140 609
- US-A- 4 622 277
- PATENT ABSTRACTS OF JAPAN vol. 10, no. 69 (E-389)(2126) 18 March 1986 & JP-A-60 218 772 ( MATSUSHITA DENKI SANGYO K.K. ) 1 November 1985
- PATENT ABSTRACTS OF JAPAN vol. 13, no. 288 (E-781)(3636) 30 June 1989 & JP-A-01 72 460 ( SANYO ELECTRIC CO. LTD.) 17 March 1989
- PATENT ABSTRACTS OF JAPAN vol. 9, no. 69 (E-305)(1792) 29 March 1985 & JP-A-59 205 160 ( TOSHIBA DENCHI K.K. ) 20 November 1984

## Description

The present invention relates to an electrode strip for a coiled electrode assembly of a galvanic cell, the strip comprising an electrically conductive tab for connection to a terminal of the cell. The present invention also relates to methods for the production of such strips.

Galvanic cells employing rolled or coiled electrode assemblies (known as the "jelly roll" construction) are widely known in the art, and are typically nickel-cadmium cells. The coiled electrode assembly is generally inserted into the composite housing which serves as the current conductive terminals for the cell.

In such structures, the electrode of one polarity is electrically connected with a conductive housing portion, and the electrode of the opposite polarity is electrically connected with another conductive housing portion insulated from the first-mentioned housing portion.

The electric contact between each electrode and its respective housing portion is generally formed by an elongated, flexible, electrically conductive connecting tab or element which is secured, at one end, to the electrode and, at the other end, is secured to the respective housing portion. When this type of cell is being assembled, the tab is first secured to the electrodes by welding, or other securing means, whereupon the opposite end of the tab is electrically secured to an appropriate conductive area of the housing. For example, the opposite end of the tab connected to the outermost wound electrode could be bent back upon the outermost separator layer of the assembly so that when the coiled electrode assembly is inserted into the housing, the tab will contact the inner surface of the housing (can portion) with sufficient pressure to provide a satisfactory electrical contact.

Cells employing coiled electrode assemblies can be produced using various electrochemical systems, such as Leclanche, nickel-cadmium, alkaline MnO₂, nickel-iron, nickel-zinc, and nickel-hydrogen.

In the uncharged condition, the innermost electrode of a nickel-cadmium cell, the positive electrode, is nickelous hydroxide, while the outermost electrode, the negative electrode, is cadmium hydroxide, the electrolyte being potassium hydroxide. In the corresponding charged condition, the positive electrode is nickelic hydroxide and the negative electrode is metallic cadmium.

The negative electrode of nickel-cadmium cells can be made by the rolling technique, such as that described in US-A-3,310,437 and US-A-3,432,351. As described therein, the carrier is usually a thin conductive strip, such as a nickel strip or nickel clad (or plated) steel strip, lanced and stretched to give an open grid of expanded metal. A mixture of electrochemically active material, binder, conductor, optionally with other components, is then coated on the carrier strip to produce a negative electrode strip.

The positive electrode may be made by the rolling technique disclosed in US-A-3,310,437 and US-A-3,432,351, or may be impregnated nickel sinter, as is well known, and usually has an extended conductive tab, such as a thin nickel strip, welded to the longitudinal side of the electrode strip which, when inserted in the can, protrudes through the open end of the can. The extended end of this conductive tab can then be suitably secured to the cover of the cell housing by conventional techniques, such as welding.

The negative electrode strip is generally the outermost wound electrode for nickel-cadmium cell systems, and usually has a conductive tab secured, at one end, to a selected area of the carrier and, at the opposite end, to the cell housing.

Conventionally, a conductive tab is welded to a selected area of the carrier by first removing the active electrode material about the area of the metal carrier to which the tab is to be attached. Generally, this removal process involves air blasting techniques. This may then be followed by coining (pressing) the area of the carrier to be attached to the tab to reduce its thickness and to flatten any burrs, and then the tab is spot welded to the selected area that has been coined.

The electrode material may also be removed by scraping the material from the carrier, or by employing suction means to remove a portion of the electrode material from the selected area of the carrier. However, the employment of these methods to clean a selected area of the carrier has, in some instances, failed to remove all of the electrode material, thus resulting in a poor welded connection to the conductive tab.

An improved method, recently disclosed, involves cleaning a selected area of an electrode strip using ultrasonic means. Such may be provided by any suitable device, such as a piezo-electric oscillator, which can produce elastic waves of frequencies beyond the audible range of generally in excess of 20,000 cycles per second. The high frequency elastic waves can be produced by quartz crystal oscillators designed for frequencies ranging up to 200 or 300 kilocycles per second.

With the recent employment of conductive carriers made of fine diameter metal wire, such as nickel wire, to produce a non-woven mat of low metal content (generally about 5% to 10% by volume), difficulties have been encountered in providing a good electronic securement of the carrier to a conductive tab. Multiple welds to one side of the mat are required if a uniformly low resistance connection is to be made. In addition, the welding electrode of the welding device generally becomes contaminated with small wire particles from the carrier during operation, so that it has to be frequently cleaned or replaced, resulting in inefficient production of the electrode strips.

Thus, in a first aspect, the present invention provides an electrode strip for a coiled electrode assembly of a galvanic cell, the strip comprising an electrically conductive tab for connection to a terminal of the cell, characterised in that the tab comprises front and back portions secured about the strip.

The front and back portions of the tab may be formed integrally or separately. If they are formed integrally, then they may be in the form of a suitably bent, or bendable, strip, for example.

The material from which the tab is made may be any that is suitable for the purpose, but will generally be a weldable metal. It is only a requirement that one of the portions of the tab be conductive to connect with the terminal, which may be either the case or the cover, for example. Thus, the second portion, whether the front or back, need not be conductive, although if it is weldable, then it will usually be conductive. It will be appreciated that the tab will fulfil the requirement of being electrically conductive, provided that the tab provides an electrical pathway from the carrier for connection to the terminal.

The second portion generally serves the purpose of providing an anchor for the first portion of the tab, rather than relying solely on the carrier for support. Thus, the method by which the tab is affixed to the strip is not important, provided that there is electrical contact with that portion of the tab connecting to the terminal.

The tab may be affixed to the strip simply by suitable crimping, where the tab is a bent strip, for example, or more generally by welding, although small rivets may also suit the purpose.

Crimping may serve to force material away from the carrier strip to allow electrical contact, but it is very much preferred to clean the strip before affixing the tab. This may be achieved by any of the techniques described above, for example.

One portion of the tab preferably protrudes beyond the strip, although this may not be necessary where the part of the strip bearing the tab is folded back to connect with the case, for example. If the tab is integral, then one construction is for both front and back portions to protrude, although it is also possible to form the tab such that only one part protrudes.

The tab will generally be located along one edge of the strip, and extend along the entire length of the edge in the axial direction, and this is a preferred embodiment, although other configurations are also envisaged.

The strip may be prepared for the affixation of the tab by cutting a portion away, for example, so that the tab will be located in a recess. This is not generally necessary.

It will also be appreciated that more than one tab may be provided within any one cell. This may be because there is more than one of a given polarity electrode or, more usually, because it is desired to provide such a tab on each electrode.

Advantages and further preferred embodiments are described below.

Advantageously, the present invention provides an electrode strip with conductive tabs secured to both sides of a clean selected area of a perforated conductive carrier of the electrode strip.

Also advantageously, the present invention provides an electrode strip made with a fine metal wire carrier and wherein a separate conductive tab is disposed onto each side of a selected area of the carrier and secured to the selected area of the carrier.

It is an advantage that the electrode strips of the invention are cost efficient to produce when using a fine metal wire carrier.

The present invention also provides a method for the production of a strip having a tab as defined above, comprising preparing an area on the strip to permit electrical contact with the tab, and securing the portions of the tab about the strip.

It is particularly advantageous that the present invention provides a method for producing a good electrical connection between a conductive carrier of an electrode strip sandwiched between two conductive tabs so that said electrode strip is suitable for use as an electrode of a coiled electrode assembly, and that there is provided a method of electrically securing conductive tabs to a thin metal wire carrier of an electrode strip.

Preferably the method comprises the cleaning of a selected area of a perforated thin nickel wire carrier coated with an electrochemically active material and then welding a conductive tab onto each side of the cleaned selected area of the carrier.

The present invention is preferably used in conjunction with nickel-cadmium jelly roll cells.

In an alternative aspect, the present invention also provides an electrode strip having a clean selected area onto which a first conductive tab is superimposed over the selected area on one side of the electrode strip and a second conductive tab is superimposed over the opposite side of the selected area and the conductive tabs are secured together and to the selected area.

The invention also provides an electrode strip suitable for use as an electrode in a coiled electrode assembly, the electrode strip comprising a perforated conductive carrier coated with an electrochemically active material and having a selected area of the carrier free of the coated electrochemically active material; a first conductive tab superimposed over and onto one side of the selected area; a second conductive tab superimposed over and onto the opposite side of the selected area; the first conductive tab and the second conductive tab secured together and to the selected area; and at least one of the conductive tabs extending beyond the edge of the electrode strip.

The present invention further provides a method for securing a conductive tab to an electrode strip that is suitable for use as an electrode in a coiled electrode assembly of an electrochemical cell comprising the steps:
a) preparing an electrode strip comprising a perforated conductive carrier coated with an electrochemical active material;
b) cleaning a selected area of the electrode strip to remove the electrochemical active material from the selected area of the electrode strip to expose the perforated conductive carrier;
c) superimposing a first conductive tab over and onto one side of selected area;
d) superimposing a second conductive tab over and onto the opposite side of the selected area with at least one of the conductive tabs extending beyond the edge of the electrode strip; and
e) securing the first conductive tab to the selected area and the second conductive tab.

The perforated carrier may, for example, be any carrier that is porous, has an open grid structure, woven structure or any other structure that permits the flow of a medium such as air or liquid through the carrier.

The first and second conductive tabs may comprise one conductive sheet folded upon itself to produce a U-shaped cross-section into which the cleaned selected area of the carrier can be inserted. In this embodiment, the portion of the conductive sheet on one side of the carrier's selected area would be the first conductive tab and the portion of the conductive sheet on the opposite side of the carrier's selected area would be the second conductive tab. At least one of the conductive tabs preferably extends beyond the edge of the electrode strip to make electrical connection with an appropriate terminal of the cell in which it is assembled.

The present invention is particularly applicable to cells comprising electrode strips employing conductive carriers of fine metal wire made into a non-woven fibre mat of very low metal content. Generally the fine metal wire may be from 18 to 22 »m in diameter, preferably from about 20 »m in diameter. The fibre mat preferably has a metal content of from 4% to 6% by volume, most preferably about 5% by volume.

By placing conductive tabs on both sides of the carrier, the tabs can be efficiently secured together and to the carrier in a continuous and uniform operation, and effectively eliminates the contamination of wire particles on the electrode of the welding apparatus when such is used as the securing means. In addition, the use of conductive tabs on both sides of the exposed conductive carrier ensures that uniformly low resistance connections are producible on a continuous basis.

The dual conductive tab design of the present invention may use conductive tab material of one-half the thickness of conventional tabs. Thus, conductive tabs from 0.002 to 0.003 inch (0.051 to 0.076mm) thick can be used in most applications, with a tab thickness of 0.003 inch (0.076mm) being preferred. This double tab design enables continuous welding to be employed in the production of electrode strips, using conventional welders with single welds or multiple weld points that are made individually or at the same time.

Any suitable means may be employed to clean the selected area of the carrier, such as air blasting techniques, scraping the material from the carrier or using ultrasonic cleaning techniques as described above.

Securing of the conductive tabs onto the selected cleaned area of the carrier may be done prior to assembling the conductive strip onto a coiled electrode assembly or after the electrode is assembled onto a coiled electrode assembly.

The preferred method of securing the conductive tabs to the conductive carrier is by conventional welding techniques, such as spot welding. The cleaning of the selected coated area of the carrier of the electrochemically active material removes the electrochemically active electrode material from the carrier, thereby making the selected area of the carrier sufficiently clean to provide a good welding area for the conductive tabs. If the selected area of the coated carrier is not properly cleaned, the particles of the coating material may interfere with the welding of the conductive tabs by interfering with the flow of electrical current through the weld joints, thereby inhibiting metal fusion between the carrier and the tab.

The location of the selected area of the carrier to be cleaned will depend upon the location or position that the electrode strip will be in when it is assembled in an electrochemical cell, since the conductive tabs need to be in a position to be electrically secured to a terminal of the cell, such as the cell's cover or container. Thus the location of the area at which the conductive tab will electrically contact the cell housing will generally dictate where the tabs are to be welded to the electrode strip. In most applications, the selected area will be at the edge of the electrode strip and preferably at the end of the electrode strip.

The selected area should be sufficient in size to accommodate the areas of the conductive tabs that are to be secured to the carrier. Preferably, the selected area should be a little larger than the areas of the conductive tabs to be secured to the carrier to ensure that a good, low resistance connection may be made without any active material or other foreign particles or dirt contaminating the securement of the tabs to the carrier. Although it is preferred to have the selected area a little larger than the area of the conductive tab, in some applications it may be desirable for the selected area to be only large enough to receive the weld (weld area). Generally, since the tab is welded to the carrier with a series of in-line welds, the area of the carrier that must be cleaned is relatively small and in some applications may be less than the area of the tab.

As stated above, in some applications it is preferable to have the selected area at least a little larger than the area of the conductive tab so that the edges of the tab are positioned below the layer of active material and are thereby protected by the active material. In this embodiment, the tab may be effectively flush mounted with or below the surface of the active material. When the tab is positioned below the surface of the active material, the tab is less likely to cut through the separation disposed between the electrodes.

In conventional type coiled assemblies intended for "sub C" size cell housing, the selected area of the strip electrode to be cleaned may be between 1/8˝ (3.175 mm) and 3/8˝ (9.525 mm) wide and preferably 1/4˝ (6.35 mm) wide. The length of the area to be cleaned should be at least 1/4˝ (6.35 mm) and preferably the entire width of the electrode. In all applications, the selected area should be sufficient to provide a good electronic contact area with the conductive tab to ensure that an effective and efficient electronic path is provided from the carrier via the tab to the terminal.

The conductive carrier for the electrode strip may be made of nickel, nickel-plated steel, nickel foam or any other conductive material. Preferably the conductive carrier may be made of fine metal wire such as a nickel fibre mat available under the trade name of FIBREX (National Standard of Niles, Michigan, U.S.A.).

The conductive carrier should be perforated, so that it has openings or pores into which the electrochemically active material may be deposited. The conductive carrier may also be a strip, such as a nickel strip that is lanced and stretched to provide an open grid expanded carrier or, as stated above, it may be a fibre mat having openings provided between fine diameter wires or strands. The conductive tabs may be a conductive metal or a non-conductive substrate coated with a conductive material. Preferably, the conductive tabs should be made of a metal such as nickel or nickel-plated steel, nickel being the most preferred.

In nickel-cadmium cell systems, the electrochemically active material to be deposited on the conductive carrier to form a negative electrode may be cadmium.

After the conductive tabs are secured to the electrode strip, preferably by spot welding, the following procedure may be used to produce a coiled electrode assembly cell:
1) superimposing a first electrode strip with the conductive tab over a second electrode strip of a different polarity with a first separator sheet between the electrode strips and a second separator sheet superimposed on one of the electrode strips;
2) rolling the electrode strips and separator sheets into a coil assembly so that the first electrode strip is electrically insulated from the second electrode strip by the separator sheets; and
3) inserting an electrolyte and the coiled assembly of step 2) into a cell housing and securing the conductive tab of the first electrode strip to a first terminal on the cell housing and securing the second electrode strip to a second terminal on the cell housing to provide a coiled electrode assembly cell.

If desired, the second electrode strip may also have conductive tabs secured to the carrier using the method of this invention.

The cell housing which includes at least a container and a cover may be made from materials such as nickel and nickel alloys, steel, nickel coated steel, tin coated steel and other conductive metals and metal alloys and the like. It will be appreciated that, in some applications, the container and cover may be made of different materials.

The separator for use in this invention may be of any conventional type material such as non-woven polyamide fibres, polypropylene fibres, fibrous-reinforced regenerated cellulose or the like.

The invention will now be further illustrated with reference to the accompanying drawings, in which:
Figure 1 is a front view of an electrode strip that has a double conductive tab secured to a selected area of the electrode strip;
Figure 2 is a side view of Figure 1 taken along line A-A;
Figure 3 is another view of an electrode strip that has a different type of conductive tab secured to a selected area of the electrode strip;
Figure 4 is a side view of Figure 3 taken along line B-B;
Figure 5 is another view of an electrode strip that uses a bent conductive sheet to form the conductive tabs that are secured to a selected area of the electrode strip;
Figure 6 is a side view of Figure 5; and
Figure 7 is an exploded view of a galvanic cell employing at least one coiled flat electrode that has a double conductive tab design secured to a selected area on the electrode strip.

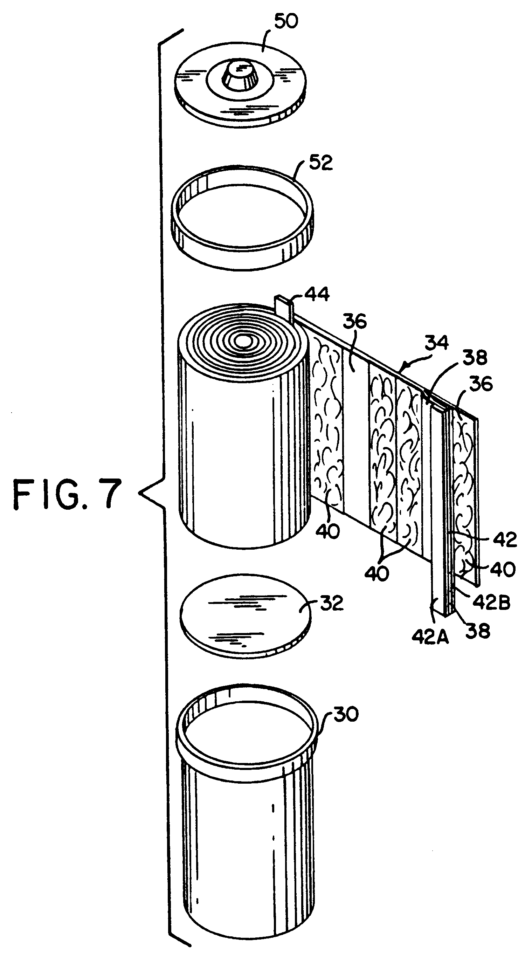

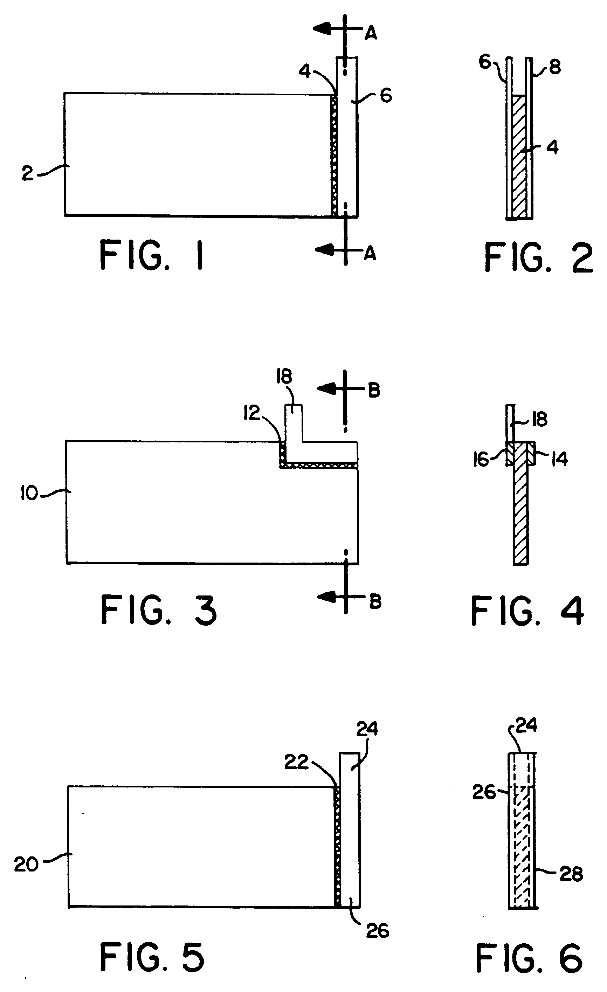

Referring to Figures 1 and 2, an electrode strip 2 is shown in which a selected carrier area 4 of the electrode strip 2 is shown between conductive tab 6 and conductive tab B. The selected area 4 is shown along the widthwise edge of the electrode 10 strip 2, and conductive tabs 6 and 8 are showing the same size with each extending beyond the edge of electrode strip 2.

Figures 3 and 4 show another electrode strip 10 in which a selected carrier area 12 is secured between conductive tab 14 and conductive tab 16. Only conductive tab 16 has a portion 18 extending beyond the edge of electrode strip 10 to make contact with a terminal member in a cell.

Figures 5 and 6 show an electrode strip 20 in which a selected area 22 is secured with a U-shaped conductive strip 24 composed of a first conductive tab 26 and a second conductive tab 28. Conductive strip 24 is bent to provide conductive tab 26 and conductive tab 28 which are dispersed on opposite sides of the selected area 22 of electrode strip 20.

In Figures 1 through 6, the conductive tabs are secured to the carrier's selected areas by any securing means, such as welding, preferably spot welding. As shown, the selected areas are slightly larger than the area of the conductive tabs secured to the areas in order to ensure that no electrochemically active material is disposed between the conductive tabs and the selected areas of the respective electrode strips.

Referring in detail to Figure 7, there is shown an exploded view of a cell employing a coiled electrode assembly. The cell comprises a cylindrical can 30 into which an insulating washer 32 is inserted to insulate the bottom of can 30. A coiled electrode assembly 34 is shown with an inner wound electrode 36, usually the positive electrode, an outer wound electrode 38, usually the negative electrode, and separators 40 which separate the electrodes. A double conductive sheet 42, composed of conductive tab 42A and conductive tab 42B, is shown welded to negative electrode 38 while a conventional type conductive tab 44 is shown welded to the positive electrode 36. If desired, a double conductive tab design similar to 42 may be used as the conductive tab for positive electrode 36.

Double conductive sheet 42 may be bent back upon the outermost separator 40 prior to inserting the electrode assembly 34 into the can 30 so that when it is inserted, tabs 42A and 42B will provide a pressure contact against the inner wall of the can 30, thus adopting the can as the negative terminal. Tab 44 may be welded to cover 50 of the cell, thereby adopting the cover 50 as the positive terminal of 25 the cell. Cover gasket 52, made of any suitable insulating material, such as nylon, is interposed between the cover 50 and can 30 in a conventional manner to seal the can 30 while also insulating the can 30 from cover 50.

In the assembled condition, tabs 42A and 42B provide the electronic contact between the negative electrode 38 and can 30. The electrode strips may be reversed so that the negative electrode is connected to the cover, if desired. Electrode 36 may also have a selected area secured to a double conductive tab.

## Claims

1. An electrode strip comprising a perforated conductive carrier coated with an electrochemically active material and having a selected area of said carrier free of the coated electrochemically active material; a first conductive tab superimposed over and onto one side of said selected area of the carrier; a second conductive tab superimposed over and onto the opposite side of said selected area of the carrier; said first conductive tab and second conductive tab secured together and to said selected area of the carrier; and at least one of said conductive tabs extending beyond an edge of the electrode strip.

2. A strip according to claim 1 wherein the coiled electrode assembly of a galvanic cell, the strip comprising an electrically conductive tab for connection to a terminal of the cell, characterised in that the tab comprises front and back portions secured about the strip, first and second conductive tabs are of the same material, and at least one of the portions preferably being nickel or nickel-plated steel.

3. A strip according to claim 1 or 2, wherein both conductive tabs extend beyond an edge of the electrode strip.

4. A strip according to claim 3, wherein at least one tab extends along the edge of the strip in the axial direction.

5. A strip according to any preceding claim, wherein the strip comprises a perforated conductive carrier made of metal wire, preferably nickel, or nickel-plated steel, and preferably having a metal content from 4 to 6 volume percent.

6. A strip according to claim 5, wherein the diameter of the wire is from 18 »m to 22 »m, preferably about 20 »m in diameter.

7. A strip according to any preceding claim, wherein the two portions of the tab are welded together and to a cleaned area of the strip.

8. A galvanic cell comprising a coiled electrode assembly containing an electrode strip as defined in any preceding claim.

9. A method for securing a conductive tab to an electrode strip, optionally as defined in any preceding claim, and that is suitable for use as an electrode in a coiled electrode assembly of an electrochemical cell comprising the steps:
(a) preparing an electrode strip comprising a perforated conductive carrier coated with an electrochemically active material;
(b) cleaning a selected area of the electrode strip to remove the electrochemically active material from the selected area of the electrode strip to expose the perforated conductive carrier;
(c) superimposing a first conductive tab over and onto one side of said selected area of the carrier and superimposing a second conductive tab over and onto the opposite side of the selected area of the carrier with at least one of the conductive tabs extending beyond an edge of the electrode strip; and
d) securing the first conductive tab and the second conductive tab together and to the selected area of the carrier.

## Patentansprüche

1. Elektrodenstreifen, der folgende Elemente aufweist: einen perforierten leitenden Träger, der mit einem elektrochemisch aktiven Material beschichtet ist und eine ausgewählte Fläche dieses Trägers hat, die frei von dem aufgebrachten, elektrochemisch aktivem Material ist; einen ersten leitenden Streifen, der auf einer Seite der ausgewählten Fläche des Trägers diese Fläche überlagert; einen zweiten leitenden Streifen, der auf der gegenüberliegenden Seite der ausgewählten Fläche des Trägers diese Fläche überlagert; wobei der erste leitende Streifen und der zweite leitende Streifen aneinander und mit der ausgewählten Fläche des Trägers verbunden sind und wobei wenigstens einer der leitenden Streifen über die Kante des Elektrodenstreifens hinaus reicht.

2. Elektrodenstreifen nach Anspruch 1, bei dem es sich um die gewickelte Elektrodenanordnung einer galvanischen Zelle handelt und wobei der Elektrodenstreifen einen elektrischen leitenden Streifen zur Verbindung mit einer Klemme der Zelle aufweist, dadurch gekennzeichnet, daß der Streifen vordere und hintere Abschnitte aufweist, die an dem Elektrodenstreifen befestigt sind, der erste und zweite leitende Streifen aus dem gleichen Material sind und wenigstens einer der Abschnitte vorzugsweise aus Nickel oder nickelplattiertem Stahl ist.

3. Elektrodenstreifen nach Anspruch 1 oder 2, bei dem beide leitende Streifen über eine Kante des Elektrodenstreifens hinaus reichen.

4. Elektrodenstreifen nach Anspruch 3, bei dem wenigstens einer der Streifen längs der Kante des Elektrodenstreifens in Axialrichtung verläuft.

5. Elektrodenstreifen nach einem der vorhergehenden Ansprüche, bei dem der Elektrodenstreifen einen perforierten leitenden Träger aufweist, der aus Metalldraht, vorzugsweise Nickel oder nickelplattiertem Stahl, hergestellt wird und vorzugsweise einen Metallgehalt von 4 bis 6 Vol.-% hat.

6. Elektrodenstreifen nach Anspruch 5, bei dem der Durchmesser des Drahtes 18 »m bis 22 »m, vorzugsweise etwa 20 »m, beträgt.

7. Elektrodenstreifen nach einem der vorhergehenden Ansprüche, bei dem die beiden Abschnitte des Streifens miteinander verschweißt und an einen gereinigten Abschnitt des Elektrodenstreifens angeschweißt sind.

8. Galvanische Zelle, die eine gewickelte Elektrodenanordnung aufweist, die einen Elektrodenstreifen nach einem der vorhergehenden Ansprüche enthält.

9. Verfahren zur Befestigung eines leitenden Streifens an einem Elektrodenstreifen, der wahlweise einem der vorstehenden Ansprüche entspricht und der für die Verwendung als Elektrode in einer gewickelten Elektrodenanordnung einer elektrochemischen Zelle geeignet ist, das die folgenden Schritte aufweist:
(a) Herstellen eines Elektrodenstreifens, der einen perforierten leitenden Träger aufweist, der mit einem elektrochemisch aktivem Material beschichtet ist;
(b) Reinigen einer ausgewählten Fläche des Elektrodenstreifens, um das elektrochemisch aktive Material von der ausgewählten Fläche des Elektrodenstreifens zu entfernen, um so den perforierten leitenden Träger freizulegen;
(c) Überlagern eines ersten leitenden Streifens über und auf eine Seite der ausgewählten Fläche des Trägers und Überlagern eines zweiten leitenden Streifens über und auf der gegenüberliegenden Seite der ausgewählten Fläche des Trägers, wobei wenigstens einer der leitenden Streifen über eine Kante des Elektrodenstreifens hinaus reicht, und
(d) Befestigen des ersten leitenden Streifens und des zweiten leitenden Streifens miteinander und an der ausgewählten Fläche des Trägers.

## Revendications

1. Bande d'électrode comprenant un support conducteur perforé revêtu d'un matériau à activité électrochimique, une zone sélectionnée dudit support étant exempte du matériau de revêtement à activité électrochimique; une première lamelle conductrice superposée sur ladite zone sélectionnée du support et sur un côté de celle-ci; une deuxième lamelle conductrice superposée au-dessus et sur le côté opposé de ladite zone sélectionnée du support; lesdites première lamelle conductrice et deuxième lamelle conductrice étant fixées ensemble et à ladite zone sélectionnée du support; et au moins une desdites lamelles conductrices s'étendant au-delà d'un bord de la bande d'électrode.

2. Bande selon la revendication 1, servant pour un assemblage d'électrode bobinée d'une pile galvanique, la bande comprenant une lamelle électroconductrice destinée à être connectée à une borne de la pile, caractérisée en ce que la lamelle comprend des parties avant et arrière fixées autour de la bande, en ce que les première et deuxième lamelles conductrices sont composées du même matériau, au moins une des parties étant de préférence composée de nickel ou d'acier plaqué au nickel.

3. Bande selon les revendications 1 ou 2, dans laquelle les deux lamelles conductrices s'étendent au-delà d'un bord de la bande d'électrode.

4. Bande selon la revendication 3, dans laquelle au moins une lamelle s'étend le long du bord de la bande dans la direction axiale.

5. Bande selon l'une quelconque des revendications précédentes, dans laquelle la lamelle comprend un support conducteur perforé composé de fil métallique, de préférence de nickel ou d'acier plaqué au nickel et ayant de préférence une teneur en métal représentant entre 4 et 6 pour cent en volume.

6. Bande selon la revendication 5, dans laquelle le diamètre du fil est compris entre 18 »m et 22 »m. le diamètre étant de préférence de l'ordre de 20 »m.

7. Bande selon l'une quelconque des revendications précédentes, dans laquelle les deux parties de la lamelle sont soudées ensemble et à une zone nettoyée de la bande.

8. Pile galvanique comprenant un assemblage d'électrode bobinée contenant une bande d'électrode comme défini dans l'une quelconque des revendications précédentes.

9. Procédé de fixation d'une lamelle conductrice à une bande d'électrode, optionnellement comme définie dans l'une quelconque des revendications précédentes, pouvant servir d'électrode dans un assemblage d'électrode bobinée d'une pile électrochimique, comprenant les étapes ci-dessous:
(a) préparation d'une bande d'électrode comprenant un support conducteur perforé revêtu d'un matériau à activité électrochimique;
(b) nettoyage d'une zone sélectionnée de la bande d'électrode pour éliminer le matériau à activité électrochimique de la zone sélectionnée de la bande d'électrode. pour exposer le support conducteur perforé;
(c) superposition d'une première lamelle conductrice au-dessus de ladite zone sélectionnée du support et sur un côté de celle-ci, et superposition d'une deuxième lamelle conductrice au-dessus et sur le côté opposé de la zone sélectionnée du support, au moins une des lamelles conductrices s'étendant au-delà d'un bord de la bande d'électrode; et
(d) fixation de la première lamelle conductrice et de la deuxième lamelle conductrice ensemble sur la zone sélectionnée du support.
